# FASCICULE DE BREVET EUROPEEN

(11) **EP 3 716 306 B1**
(45) Date de publication et mention de la délivrance du brevet: **26.07.2023**
(21) Numéro de dépôt: 20165093.4
(22) Date de dépôt: 24.03.2020
(51) Int. Cl.: H01H 9/52, H01H 33/666

(54) **APPAREIL DE COMMUTATION POUR VÉHICULE ET VÉHICULE ASSOCIÉ**
SCHALTGETRIEBE FÜR FAHRZEUG UND ENTSPRECHENDES FAHRZEUG
SWITCHING APPARATUS FOR A VEHICLE AND ASSOCIATED VEHICLE

(30) Priorité: 25.03.2019 FR 1903075
(43) Date de publication de la demande: 30.09.2020
(73) Titulaire: ALSTOM Transport Technologies, 93400 Saint-Ouen (FR)
(72) Inventeur: TAINE, Antoine, 65600 SEMEAC (FR); TERRIEN, François, 65000 TARBES (FR)
(74) Mandataire: Lavoix

(56) Documents cités:
- FR-A1- 2 939 561
- FR-A2- 2 199 182
- US-A1- 2018 215 284

## Description

La présente invention concerne un appareil de commutation pour véhicule, notamment pour véhicule ferroviaire, l'appareil de commutation étant selon le préambule de la revendication 1.

Un tel appareil comprend par exemple un disjoncteur électrique. Dans ce cas, l'appareil est placé dans un circuit électrique d'alimentation en électricité d'un véhicule ferroviaire afin de protéger ledit circuit électrique d'alimentation en cas de court-circuit.

Généralement, l'appareil est en partie intégré à la toiture du véhicule ferroviaire en s'étendant perpendiculairement à la toiture. La toiture du train, qui est typiquement réalisée en un matériau métallique, est soumise aux rayonnements extérieurs, en particulier au rayonnement solaire. La toiture est alors chauffée par irradiation et la température augmente à proximité et à l'intérieur de l'appareil de commutation. En fonction des conditions climatiques, l'appareil de commutation est susceptible d'être soumis à des températures importantes, typiquement allant jusqu'à 70 degrés Celsius (°C).

En particulier, le dispositif de commande est soumis à des variations de températures importantes au cours de l'utilisation du véhicule. Les températures vues par ses composants électroniques sont susceptibles d'atteindre des valeurs élevées, par exemple supérieures à 100°C. La fiabilité des composants diminue alors de manière conséquente à de telles températures. Par ailleurs, la durée de vie des composants électroniques est négativement impactée, et des opérations de maintenance fréquentes sont nécessaires.

Il est connu de limiter la température vue par des composants sensibles à la chaleur en les plaçant dans des caissons réalisés en un matériau isolant, par exemple un matériau comprenant de la laine de verre.

Un tel caisson ne donne pas cependant entière satisfaction et ne permet par exemple pas d'évacuer de la chaleur générée par les composants électroniques lors de leur fonctionnement.

Le document FR 2 939 561 A1 décrit un dispositif de refroidissement de l'intérieur d'un sectionneur à fort ampérage.

Le document US 2018/215284 A1 décrit un dispositif de commande de voiture électrique comprenant un convertisseur, un onduleur, une unité de refroidissement du convertisseur et une unité de refroidissement de l'onduleur.

Un but de l'invention est alors de proposer un appareil de commutation limitant un tel risque de dysfonctionnement.

A cet effet, l'invention a pour objet un appareil de commutation selon la revendication 1.

Le dispositif de renouvellement d'air selon l'invention permet, d'une part, de limiter la condensation au sein de l'enceinte et, d'autre part, de refroidir le dispositif de commande. Le dispositif de commande est donc soumis à des variations de températures plus modérées, ce qui limite la détérioration des composants dudit dispositif.

L'appareil de commutation est donc plus sûr et sa durée de vie est prolongée.

Selon d'autres aspects avantageux de l'invention, l'appareil de commutation est selon l'une quelconque des revendications 2 à 9.

L'invention a également pour objet un véhicule, notamment ferroviaire, selon la revendication 10.

D'autres aspects et avantages de l'invention apparaîtront à la lecture de la description qui va suivre, donnée uniquement à titre d'exemple non limitatif, et faite en se référant aux dessins annexés, sur lesquels :
- La figure 1 est une vue schématique en coupe d'un appareil de commutation selon l'invention, l'appareil de commutation comprenant un dispositif de renouvellement d'air selon un premier mode de réalisation ;
- La figure 2 est une vue schématique en coupe d'une partie d'un appareil de commutation analogue à l'appareil de la figure 1, dans lequel le dispositif de renouvellement d'air est selon une variante du premier mode de réalisation ;
- La figure 3 est une vue schématique en coupe d'une partie d'un appareil de commutation analogue à l'appareil de la figure 1, le dispositif de renouvellement d'air étant selon un deuxième mode de réalisation ; et
- La figure 4 est une vue analogue à celle de la figure 2, le dispositif de renouvellement d'air étant selon un troisième mode de réalisation ;
- La figure 5 est une vue analogue à celle de la figure 4, le dispositif de renouvellement d'air étant selon une variante du troisième mode de réalisation.

Dans la suite de la description, l'expression « sensiblement égal à » définit une relation d'égalité à plus ou moins 20%, de préférence à plus ou moins 10%.

On entend par « haute tension » au sens de l'invention, une tension électrique sensiblement supérieure ou égale à 5 kilovolts (5 kV).

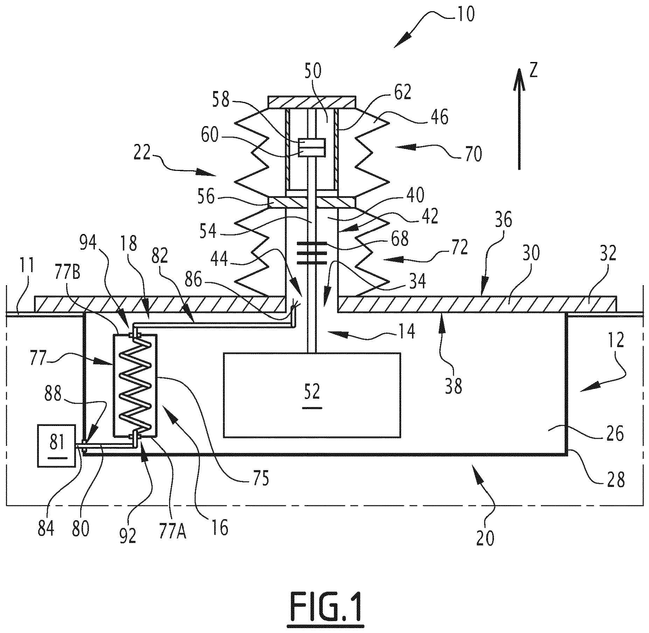

Un appareil 10 de commutation selon l'invention est représenté sur la figure 1.

L'appareil 10 de commutation est destiné à être monté au-dessus ou à l'intérieur d'un véhicule ferroviaire (non représenté), en particulier un train, un tramway, un métro ou autre. De façon classique, le véhicule ferroviaire comprend notamment un toit 11, un pantographe et un réseau électrique haute tension, non représentés.

L'appareil 10 de commutation est par exemple destiné à être monté sur le toit 11 du véhicule ferroviaire.

L'appareil 10 de commutation est configuré pour permettre la circulation d'un courant électrique à haute tension. Le courant est notamment apte à circuler via des pièces nues sous tension.

En référence à la figure 1, l'appareil 10 comprend une enceinte 12, un dispositif de commutation 14 disposé à l'intérieur de l'enceinte 12, un dispositif de commande 16 du dispositif de commutation 14, le dispositif de commande 16 étant disposé à l'intérieur de l'enceinte 12, et un dispositif de renouvellement d'air 18 configuré pour renouveler au moins en partie, c'est-à-dire au moins partiellement, l'air dans l'enceinte 12.

L'enceinte 12 est susceptible de présenter différentes formes géométriques suivant la nature de l'appareil de commutation 10.

Sur la figure 1, l'enceinte 12 est disposée en partie à l'intérieur du véhicule et en partie sur le toit 11 du véhicule. L'enceinte 12 comporte un compartiment 20 et une colonne 22 débouchant sur le compartiment 20.

Sur la figure 1, le compartiment 20 et la colonne 22 sont disposés de part et d'autre d'une ouverture ménagée dans le toit 11 du véhicule.

Le compartiment 20 est disposé à l'intérieur du véhicule, en regard de l'ouverture ménagée dans le toit 11 du véhicule.

Le compartiment 20 présente par exemple une forme de parallélépipède rectangle. Le compartiment 20 définit une cavité centrale 26 délimitée par une paroi interne 28 et par une plaque de support 30 fermant en partie l'ouverture ménagée dans le toit 11.

La paroi interne 28 est sensiblement poreuse à l'air et permet ainsi la diffusion de l'air depuis l'intérieur de l'enceinte 12 vers l'extérieur de l'enceinte 12. La pression à l'intérieur de l'enceinte 12 est maintenue sensiblement constante. La paroi interne 28 est par exemple réalisée en aluminium. En variante, la paroi interne 28 est étanche à l'air et comprend au moins une ouverture permettant l'évacuation de l'air depuis l'intérieur vers l'extérieur de l'enceinte 12.

La plaque de support 30 définit une zone périphérique 32 fixée à au moins une partie du toit 11 du véhicule. La plaque de support 30 présente une ouverture 34 disposée sensiblement au centre de la plaque de support 30. La plaque de support 30 présente une face supérieure 36 orientée vers l'extérieur du véhicule et une face inférieure 38 orientée vers l'intérieur du véhicule, et notamment vers la cavité centrale 26 du compartiment 20. La face supérieure 36 de la plaque de support 30 est soumise aux rayonnements extérieurs, en particulier au rayonnement solaire lorsque le véhicule circule en extérieur.

De préférence, la plaque de support 30 est réalisée en un matériau métallique, par exemple en aluminium.

La colonne 22 est disposée sur la plaque de support 30 et s'étend au-dessus de la plaque de support 30 sensiblement selon une direction d'élévation Z du véhicule.

La colonne 22 est susceptible de présenter différentes formes. Par exemple, la colonne 22 s'étend selon un axe longitudinal et présente une section radiale, ladite section ayant typiquement la forme d'un cercle, d'une ellipse ou d'un polygone.

Par exemple, la colonne 22 présente une symétrie de révolution autour d'un axe longitudinal. Dans l'exemple de la figure 1, la colonne 22 présente une forme sensiblement cylindrique s'étendant selon l'axe longitudinal.

De préférence, ledit axe longitudinal est sensiblement parallèle à la direction d'élévation Z du véhicule. En variante, l'axe longitudinal est sensiblement perpendiculaire à la direction d'élévation Z du véhicule.

En variante, la colonne 22 présente une forme de parallélépipède rectangle.

La colonne 22 définit une cavité 40 centrale délimitée par une paroi externe 42. La colonne 22 présente au moins une ouverture 44. Dans l'exemple de la figure 1, la colonne 22 présente une première ouverture 44 orientée vers le compartiment 20 et ouvrant sur l'ouverture 34 ménagée dans la plaque de support 30.

Avantageusement, la paroi externe 42 présente une pluralité d'ailettes 46, telles que des ailettes annulaires circonférentielles s'étendant en saillie radialement vers l'extérieur de l'appareil 10. Les ailettes 46 sont sensiblement parallèles entre elles. Les ailettes 46 réduisent le risque de création et propagation d'un arc électrique à la surface de la paroi externe 42 de la colonne 22.

La colonne 22 est réalisée en un matériau isolant. Avantageusement, la colonne 22 est dépourvue de matériau métallique de sorte à n'assurer aucune conduction électrique. De préférence, la colonne 22 est réalisée en un matériau polymérique. Le matériau polymérique comprend préférentiellement au moins un polymère époxyde, aussi connu sous le nom de « polyépoxyde » ou de « polymère époxy ». En variante, la colonne 22 est réalisée en un matériau céramique.

Dans l'exemple de la figure 1, le dispositif de commutation 14 est un dispositif de disjonction.

Le dispositif de commutation 14 comprend un interrupteur 50 électrique, un actionneur 52 et un organe d'entrainement 54 reliant l'interrupteur 50 à l'actionneur 52. Le dispositif de commutation 14 comprend en complément un écran 56.

L'interrupteur 50 électrique est disposé dans la colonne 22. L'interrupteur 50 électrique comprend un premier contact électrique 58, un deuxième contact électrique 60 et une ampoule 62 à l'intérieur de laquelle s'étendent les premier et deuxième contacts électriques 58, 60.

Par exemple, l'interrupteur 50 est un interrupteur à vide, l'ampoule 62 étant alors une ampoule à vide. Comme connu en soi, l'utilisation d'un interrupteur à vide permet de commuter des courants et d'isoler un circuit sous une tension élevée avec des distances inter-contact faibles, le vide jouant le rôle d'isolant électrique. Le premier contact 58 est fixe par rapport à l'ampoule 62. Le deuxième contact électrique 60 est mobile entre une position de fermeture (ou position fermée) de l'interrupteur 50 dans laquelle le deuxième contact 60 est en appui contre le premier contact 58 (comme représenté sur la figure 1) et une position d'ouverture (ou position ouverte) de l'interrupteur 50 dans laquelle le deuxième contact 60 est à l'écart du premier contact 58.

Les contacts électriques 58, 60 sont reliés électriquement à une borne respective de connexion électrique, chaque borne de connexion étant disposée à l'extérieur de l'ampoule 62. Par exemple, le deuxième contact électrique est relié à sa borne de connexion respective au moyen d'une tresse (non représentée).

Comme connu en soi, les bornes de connexion sont aptes à être reliées électriquement entre elles en position de fermeture de l'interrupteur 50, les contacts électriques 58, 60 étant alors en appui l'un contre l'autre, et sont aptes à être isolées électriquement l'une de l'autre en position d'ouverture de l'interrupteur 50, les contacts électriques 58, 60 étant alors à l'écart l'un de l'autre. Les bornes de connexion sont propres à supporter des tensions électriques supérieures à 5 kV, par exemple sensiblement égales à 25kV. Les bornes de connexion sont par exemple reliées à un pantographe ou au réseau électrique du véhicule ferroviaire.

L'organe d'entrainement 54 est disposé à l'extérieur de l'interrupteur 50 et s'étend selon un axe d'extension. Dans l'exemple de la figure 1, ledit axe d'extension est confondu avec l'axe longitudinal de la colonne 22. L'organe d'entrainement 54 s'étend à travers l'ouverture 44 de la colonne 22 et l'ouverture 34 de la plaque de support 30.

L'organe d'entrainement 54 est fixé au deuxième contact 60 mobile en une première extrémité et est fixé à l'actionneur 52 en une deuxième extrémité. La fixation de l'organe d'entrainement 54 en sa deuxième extrémité à l'actionneur 52 est une fixation directe, ou encore indirecte via un renvoi d'angle ou un réducteur.

L'organe d'entrainement 54 relie l'interrupteur 50 à l'actionneur 52. L'organe d'entrainement 54 permet le déplacement du deuxième contact électrique 60 entre la position de fermeture et la position d'ouverture de l'interrupteur 50.

Dans l'exemple de la figure 1, l'organe d'entrainement 54 présente la forme d'une tige. La tige présente une section radiale, ladite section ayant par exemple la forme d'un cercle, d'une ellipse ou d'un polygone, notamment d'un rectangle.

L'organe d'entrainement 54 assure une isolation électrique entre le deuxième contact électrique 60 et l'actionneur 52. L'organe d'entrainement 54 est réalisé par exemple en matériau stratifié à base de fibres de verre. Avantageusement, et comme représenté sur la figure 1, l'organe d'entrainement 54 comprend au moins une ailette 68 s'étendant en saillie radialement par rapport à la tige. La ou les ailette(s) 68 limite(nt) le risque de propagation d'un arc électrique respectif à la surface de l'organe d'entrainement 54.

L'organe d'entrainement 54 comporte au moins un organe de rappel (non représenté) agencé pour exercer sur le deuxième contact électrique 60 un effort de rappel de la position de fermeture de l'interrupteur 50 vers la position d'ouverture de l'interrupteur 50. L'organe de rappel est par exemple un ressort.

L'écran 56 est disposé entre l'interrupteur 50 et l'actionneur 52, de sorte que l'interrupteur 50 et l'actionneur 52 sont disposés de part et d'autre dudit écran 56.

L'écran 56 est préférentiellement fixé à la colonne 22, par exemple au moyen d'un organe de vissage et/ou pinçage (non représenté). En variante, l'écran 56 est collé à la colonne 22.

Comme représenté sur la figure 1, la cavité 40 de la colonne 22 est divisée en une première partie 70 et une deuxième partie 72 délimitées en partie par l'écran 56.

L'interrupteur 50 est disposé dans la première partie 70 de la cavité 40. L'écran 56 isole l'interrupteur électrique 50 du reste du dispositif de commutation 14 et limite le risque de création ou de propagation d'un arc électrique formé dans la première partie 70 de la colonne 22 vers la deuxième partie 72 de la colonne 22. L'écran 56 limite en outre la diffusion de l'humidité présente dans l'air, depuis la deuxième partie 72 de la colonne 22 vers la première partie 70 de la colonne 22. Ainsi, la première partie 70 de la colonne 22 présente un taux d'humidité plus faible que le taux d'humidité à proximité de l'actionneur 52.

L'écran 56 présente un évidement à travers lequel s'étend l'organe d'entrainement 54. L'organe d'entrainement 54 est mobile par rapport à l'écran 56, notamment grâce à l'organe de rappel.

L'actionneur 52 agit à l'encontre de l'organe de rappel. L'actionneur 52 est agencé pour exercer une force opposée à la force exercée par l'organe de rappel en maintenant le deuxième contact électrique 60 dans la position fermée. Dans l'exemple de la figure 1, l'actionneur 52 est un électroaimant.

L'actionneur 52 est disposé à l'intérieur du compartiment 20. L'actionneur 52 est configuré pour entrainer le déplacement de l'organe d'entrainement 54, et ainsi le déplacement du deuxième contact électrique 60 entre la position ouverte et la position fermée. L'actionneur 52 commande donc le passage du courant à l'intérieur de l'interrupteur électrique 50.

Le dispositif de commande 16 est configuré pour commander l'actionneur 52, notamment pour que ledit actionneur 52 maintienne le deuxième contact électrique 60 dans la position fermée.

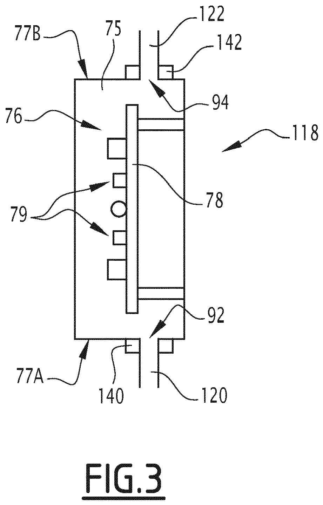

Le dispositif de commande 16 comprend un boitier 75 et une carte de pilotage 76 (représentée uniquement sur la figure 3 dans un souci de visibilité) disposée à l'intérieur du boitier 75.

Le boitier 75 comporte une pluralité de faces 77. Dans la suite de la description, l'expression « face 77 » désignera n'importe quelle face du boitier 75.

Sur la figure 1, le boitier 75 présente sensiblement une forme de parallélépipède rectangle. En variante, le boitier 75 présente une forme de cylindre de révolution.

Le boitier 75 est réalisé de préférence en aluminium.

La carte de pilotage 76 est propre à commander l'actionneur 52 en lui transmettant des consignes. La carte de pilotage 76 comporte un circuit imprimé 78 sur lequel sont disposés une pluralité de composants électroniques 79 connus en soi. Lesdits composants électroniques 79 sont susceptibles de s'échauffer lors de leur fonctionnement.

Comme représenté sur la figure 1, le dispositif de renouvellement d'air 18 relie l'extérieur de l'enceinte 12 à l'intérieur de l'enceinte 12. Le dispositif de renouvellement d'air 18 est propre à injecter de l'air dans l'enceinte 12 pour limiter la condensation au sein de l'enceinte 12, et éviter ainsi qu'un arc électrique qui se serait formé dans l'enceinte 12 puisse se propager.

De préférence, le véhicule comprend un réseau de circulation d'air comprenant avantageusement un compresseur d'air et propre notamment à alimenter le pantographe, pour commander son déplacement entre une position active où le pantographe est en contact avec la caténaire et une position de repos où le pantographe est abaissé et à distance de la caténaire. Avantageusement, l'air injecté par le dispositif de renouvellement d'air 18 provient dudit réseau de circulation d'air.

En particulier, le dispositif de renouvellement d'air 18 est propre à injecter de l'air dans la deuxième partie 72 de la colonne 22, à proximité de l'organe d'entrainement 54. Le dispositif de renouvellement d'air 18 est propre à injecter de l'air avec un débit de l'ordre de 20.10⁻³ normo mètres cube par minute (Nm³/min). Un normo mètre cube est une unité de mesure de quantité de gaz correspondant au contenu d'un volume d'un litre pour un gaz se trouvant à 0°C et à une pression de 101 325 Pa, tel que défini par la norme DIN 1343 publiée le 1^{er} janvier 1990.

Le taux d'humidité dans la deuxième partie 72 de la colonne 22 est ainsi maintenu à un taux faible, typiquement inférieur à 20%. La barrière de protection contre la propagation d'un arc électrique depuis la première partie 70 de la colonne 22 vers le reste de l'enceinte 12 est ainsi renforcée. Le risque qu'un arc électrique se propage à travers l'évidement de l'écran 56 est limité.

Sur la figure 1, le dispositif de renouvellement d'air 18 comprend au moins un tube 80 et un dispositif d'injection d'air 81.

Le dispositif d'injection d'air 81 est disposé à l'extérieur de l'enceinte 12. Le dispositif d'injection d'air 81 est par exemple un compresseur d'air. Par exemple, le dispositif d'injection d'air 81 est le compresseur d'air qui alimente le pantographe.

Le tube 80 comprend une paroi 82 fermée définissant une lumière. La paroi 82 est avantageusement réalisée en un matériau polymérique, de préférence en polyamide. Par exemple, la paroi 82 est réalisée en Polyamide 12 comprenant un plastifiant, stabilisé à la lumière et à la chaleur (couramment désigné par l'acronyme PA12 PHL).

Le tube 80 s'étend entre une première extrémité 84 débouchant à l'extérieur de l'enceinte 12 et une deuxième extrémité 86 débouchant à l'intérieur de l'enceinte 12. Dans l'exemple de la figure 1, la deuxième extrémité 86 du tube 80 débouche dans la deuxième partie 72 de la colonne 22.

De préférence, la deuxième extrémité 86 du tube 80 débouche à proximité de l'ouverture 44 de la colonne 22, typiquement à une distance de l'ouverture 44 inférieure à 30 cm.

Le tube 80 traverse la paroi interne 28 du compartiment 20 au niveau d'une ouverture 88 réalisée dans ladite paroi interne 28. Selon un mode de réalisation particulier, la première extrémité 84 du tube 80 affleure au niveau de l'ouverture 88 réalisée dans la paroi interne 28. En variante, le tube 80 fait saillie hors de l'enceinte 12 et la première extrémité 84 du tube 80 est à l'écart de ladite ouverture 88.

La première extrémité 84 du tube 80 est connectée au dispositif d'injection d'air 81 et permet l'entrée d'air depuis l'extérieur de l'enceinte 12 vers l'intérieur de l'enceinte 12.

Le tube 80 présente une section radiale, ladite section ayant par exemple la forme d'un cercle, d'une ellipse ou d'un polygone, notamment d'un rectangle. De préférence, le tube 80 présente une section radiale en forme de cercle. La section radiale du tube 80 présente une aire comprise entre 20 mm² et 100 mm², notamment entre 28 mm² et 78 mm².

Un joint 90 d'étanchéité est avantageusement disposé autour de l'ouverture 88 et assure l'étanchéité à l'interface entre le tube 80 et la paroi interne 28.

Le dispositif de renouvellement d'air 18 est configuré en outre pour refroidir le dispositif de commande 16 du dispositif de commutation 14, de préférence par conduction entre le dispositif de renouvellement d'air 18 et le dispositif de commande 16.

Le dispositif de renouvellement d'air 18 selon l'invention a alors une double fonctionnalité, à savoir d'une part le renouvellement de l'air à l'intérieur de l'enceinte 12 et d'autre part le refroidissement du dispositif de commande 16.

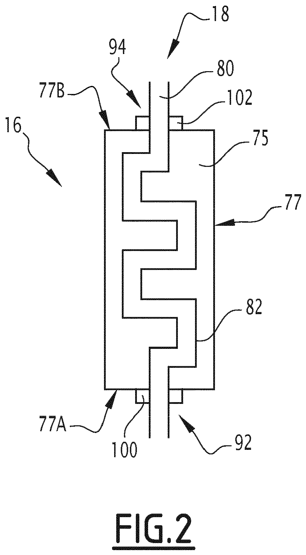

Selon un premier mode de réalisation représenté sur les figures 1 et 2, le tube 80 traverse le boitier 75 du dispositif de commande 16. Le tube 80 entre dans le boitier 75 à travers un orifice d'entrée 92 sur une première face 77A du boitier 75 et ressort du boitier 75 à travers un orifice de sortie 94 sur une deuxième face 77B du boitier 75. En variante non représentée, l'orifice d'entrée 92 et l'orifice de sortie 94 sont disposés sur une même face du boitier 75.

Dans la suite de la description, l'expression « première face 77A » désignera la face 77 du boitier 75 présentant l'orifice d'entrée 92 et l'expression « deuxième face 77B » désignera la face 77 du boitier 75 présentant l'orifice de sortie 94.

Sur les figures 1 et 2, les première et deuxième faces 77A, 77B sont les faces d'extrémité du boitier 75. L'homme du métier comprendra aisément que d'autres agencements des orifices d'entrée 92 et de sortie 94 sont possibles, notamment qu'au moins une de la première face 77A et de la deuxième face 77B peut être une face latérale. En variante encore, les orifices d'entrée 92 et de sortie 94 sont ménagés sur une même face 77, et les première et deuxième faces 77A, 77B sont alors confondues en une unique face.

Un segment du tube 80 s'étend à l'intérieur du boitier 75 entre l'orifice d'entrée 92 et l'orifice de sortie 94. Ledit segment présente une longueur comprise entre 150 mm et 600 mm.

Le segment de tube 80 est susceptible de présenter différents agencements, ou encore différentes formes.

Dans l'exemple de la figure 1, le segment de tube 80 présente une forme d'une spirale hélicoïdale. Cela permet un bon compromis entre l'aire de la surface d'échange entre la paroi 82 du tube 80 et l'intérieur du boitier 75, et l'encombrement du tube 80 à l'intérieur du boitier 75.

Selon une variante représentée sur la figure 2, le segment de tube 80 présente un agencement en boustrophédon, aussi appelé agencement en créneau.

Selon une variante non représentée, le segment de tube 80 présente une forme rectiligne.

L'aire de la surface d'échange entre le segment du tube 80 s'étendant à l'intérieur du boitier 75 et l'intérieur du boitier 75 est supérieure à 3 000 mm², de préférence supérieure à 10 000 mm².

Avantageusement, une partie de la paroi 82 du tube 80 est en contact avec au moins un composant électronique à l'intérieur du boitier 75.

Les échanges thermiques entre l'air transporté par le tube 80 et l'intérieur du boitier 75 entrainent une diminution de la température à l'intérieur dudit boitier 75 et donc un refroidissement de la carte de pilotage 76, en particulier des composants électroniques 79 du dispositif de commande 16. Par exemple, lesdits échanges thermiques entrainent une diminution de la température à l'intérieur dudit boitier 75 par rapport à un appareil de commutation dépourvus desdits échanges thermiques.

Des joints 100, 102 d'étanchéité sont avantageusement disposés autour respectivement de l'orifice d'entrée 92 et de l'orifice de sortie 94, et assurent l'étanchéité à l'interface entre le tube 80 et la ou les faces 77A, 77B du boitier 75.

Le fonctionnement de l'appareil 10 de commutation selon le premier mode de réalisation de l'invention va être à présent décrit.

Lors de l'utilisation de l'appareil 10 de commutation, le dispositif de commande 16 commande le dispositif de commutation 14 pour faire passer l'interrupteur 50 de la position ouverte à la position fermée, et inversement. Le dispositif de commande 16 transmet des consignes à l'actionneur 52 pour que ledit actionneur 52 exerce une force opposée à la force exercée par l'organe de rappel en maintenant le deuxième contact électrique 60 dans la position fermée.

Le fonctionnement du dispositif de commande 16 entraine un échauffement de ses composants, et notamment de la carte de pilotage 76.

De plus, les rayonnements arrivant sur le toit 11 du véhicule et sur l'appareil de commutation 10, en particulier sur la face supérieure 36 de la plaque de support 30, entrainent une augmentation de la température au sein du compartiment 20, notamment un échauffement du dispositif de commande 16 et des composants électroniques 79.

Le dispositif de renouvellement d'air 18 injecte de l'air dans l'enceinte 12 pour limiter la condensation au sein de l'enceinte 12 et la propagation d'un éventuel arc électrique. De l'air est injecté par le dispositif d'injection d'air depuis l'extérieur de l'enceinte 12 vers l'intérieur de l'enceinte 12. L'air injecté circule dans le tube 80 depuis la première extrémité 84 jusqu'à la deuxième extrémité 86 et débouche dans la deuxième partie 72 de la colonne 22, à proximité de l'organe d'entrainement 54.

En passant dans le tube 80, l'air injecté refroidit la paroi 82 du tube 80, et notamment la portion de la paroi 82 du segment de tube 80 s'étendant à travers le dispositif de commande 16.

La paroi 82 du tube 80 refroidie par l'air injectée refroidit à son tour par conduction l'intérieur du boitier 75 du dispositif de commande 16, et entraine donc un refroidissement de la carte de pilotage 76, en particulier des composants électroniques 79 du dispositif de commande 16.

La température moyenne à l'intérieur du boitier 75 du dispositif de commande 16 est alors de préférence inférieure à 70 °C.

La perméabilité aux gaz du compartiment 20 permet à l'air de passer de l'intérieur de l'enceinte 12 à l'extérieur de l'enceinte 12, et ainsi de maintenir une pression sensiblement constante au sein de l'enceinte 12.

Un dispositif de renouvellement d'air 118 selon un deuxième mode de réalisation est représenté en partie sur la figure 3 et diffère du dispositif de renouvellement d'air 18 selon le premier mode de réalisation en ce que le tube 80 est dépourvu de segment s'étendant à l'intérieur du boitier 75.

Le tube 80 est formé du boitier 75, d'une première partie 120 et d'une deuxième partie 122. Les première et deuxième parties 120, 122 sont connectées au boitier 75 et s'étendent de part et d'autre du boitier 75.

La première partie 120 s'étend entre la première extrémité 84 débouchant à l'extérieur de l'enceinte 12 et le boitier 75, plus particulièrement entre la première extrémité 84 et l'orifice d'entrée 92 sur la première face 77A du boitier 75.

La deuxième partie 122 s'étend entre le boitier 75 et la deuxième extrémité 86 débouchant à l'intérieur de l'enceinte 12, plus particulièrement entre l'orifice de sortie 94 sur la deuxième face 77B du boitier 75 et la deuxième extrémité 86.

Sur la figure 3, le flux d'air traverse le boitier 75 du côté du circuit imprimé 78 opposé à la face du circuit imprimé 78 sur laquelle sont disposés les composants électronique 79. Cette configuration est particulièrement adaptée lorsque les composants électroniques 79 sont fragiles et risqueraient d'être endommagés par un flux d'air arrivant directement sur eux.

En variante, le flux d'air traverse le boitier 75 du côté de la face du circuit imprimé 78 sur laquelle sont disposés les composants électronique 79. Le refroidissement desdits composants électroniques 79 est alors optimisé.

L'air entrant par l'orifice d'entrée 92 refroidit la carte de pilotage 76 et ses composants 79 par convection, avant de sortir par l'orifice de sortie 94.

Des joints 140, 142 d'étanchéité sont avantageusement disposés autour respectivement de l'orifice d'entrée 92 et de l'orifice de sortie 94 et assurent l'étanchéité à l'interface entre chaque tuyau 120, 122 et la ou les faces 77A, 77B du boitier 75.

Avantageusement, un filtre (non représenté) est disposé à l'orifice de sortie 94 du boitier 75 du dispositif de commande 16.

Ledit filtre vise à bloquer les éventuels résidus et/ou particules en amont du filtre, notamment les particules de poussière, et les empêche de parvenir jusque dans la colonne 22.

En variante (non représentée), au moins l'un du premier et du deuxième tuyau 120, 122 fait saillie à l'intérieur du boitier 75

Le dispositif de renouvellement d'air 118 favorise les échanges thermiques par convection au sein du dispositif de commande 16, et est particulièrement simple à mettre en oeuvre.

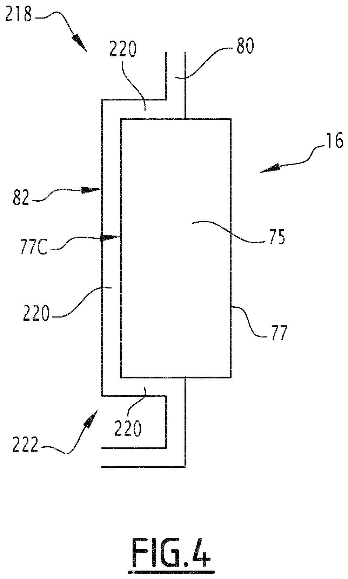

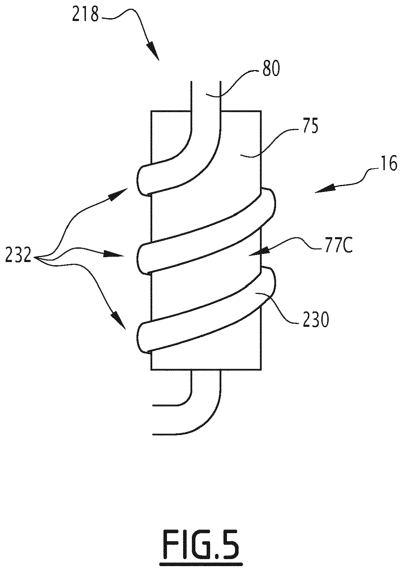

Un dispositif de renouvellement d'air 218 selon un troisième mode de réalisation est représenté en partie sur les figures 4 et 5 et diffère du dispositif de renouvellement d'air 18 selon le premier mode de réalisation en ce que le boitier 75 est dépourvu d'orifices d'entrée et de sortie. Le tube 80 ne traverse alors pas le boitier 75 du dispositif de renouvellement d'air 16.

Selon ce troisième mode de réalisation, le tube 80 s'étend en partie le long du boitier 75. Le tube 80 est avantageusement directement ou indirectement en contact avec au moins une face 77C dudit boitier 75.

Dans la suite de la description, l'expression « face 77C » désignera une face 77 du boitier 75 avec laquelle au moins une partie du tube 80 est directement ou indirectement en contact.

On entend par « directement en contact » que la paroi 82 du tube 80 et au moins une face 77C sont en contact l'une avec l'autre. On entend par « indirectement en contact » que la paroi 82 du tube 80 et au moins une face 77C sont en contact chacune avec une couche thermiquement conductrice disposée entre la paroi 82 et la face 77.

Le tube 80 est susceptible de présenter différents agencements, afin de favoriser les échanges thermiques entre l'air transporté à l'intérieur du tube 80 et le boitier 75.

Par exemple, le tube 80 présente au moins un segment rectiligne, ledit segment étant en contact avec une face 77C du boitier 75 et longeant le boitier 75 de préférence à proximité de la région du boitier dans laquelle est disposée la carte de pilotage 76.

Sur la figure 4, le tube 80 présente une pluralité de segments 220, chaque segment 220 étant relié à un autre segment 220 par un coude 222. Chaque segment 220 est en contact avec une face 77C du boitier 75. Les échanges thermiques entre l'air transporté à l'intérieur du tube 80 et le boitier 75 sont ainsi améliorés.

Sur la figure 4, les faces 77C sont les faces d'extrémité et une face latérale du boitier 75.

Selon une autre variante, représentée sur la figure 5, le tube 80 est en forme d'une spirale 230 hélicoïdale comprenant une pluralité de spires 232, le boitier 75 étant disposé à l'intérieur de ladite spirale 230. Cette variante est particulièrement avantageuse lorsque le boitier 75 est en forme d'un cylindre de révolution. Le tube 80 est alors en contact avec la face 77C latérale dudit cylindre de révolution. De préférence, la spirale 230 comprend entre deux et cinq spires 232.

Avantageusement, lorsque le tube 80 présente une section en forme de cercle ou d'ellipse, une couche (non représentée) d'un composé thermiquement conducteur est disposée entre le tube 80 et le boitier 75. Par exemple, ladite couche est une couche de mousse thermiquement conductrice. Ladite couche augmente alors la surface d'échange entre le tube 80 et le boitier 75.

Selon un quatrième mode de réalisation (non représenté), le tube 80 comporte un premier canal et un deuxième canal relié au premier canal en une première zone de jonction située en amont du boitier 75 et en une deuxième zone de jonction située en aval du boitier 75.

Le premier canal s'étend au moins en partie à l'intérieur du boitier 75. De préférence, le premier canal s'étend au moins en partie à proximité des composants électroniques 79 les plus sensibles à la chaleur et/ou les plus susceptibles de s'échauffer lors de leur fonctionnement, typiquement à une distance inférieure à 10 mm desdits composants électroniques 79. Le premier canal permet ainsi de refroidir efficacement les composants électroniques 79 les plus sensibles à la chaleur.

Le deuxième canal ne traverse pas le boitier 75 et s'étend au moins en partie le long du boitier 75. Le deuxième canal permet ainsi de refroidir le boitier 75 de manière globale.

L'air arrivant dans la première zone de jonction est alors séparé en deux flux. Un premier flux passe dans le premier canal et traverse le boitier 75. Un deuxième flux passe dans le deuxième canal et longe l'extérieur du boitier 75. Les premier et deuxième flux se rejoignent ensuite dans la deuxième zone de jonction dans laquelle ils sont mélangés pour former un unique flux d'air. Autrement dit, le tube 80 se divise en deux en la première zone de jonction située en amont du boitier 75, pour se rejoindre en la deuxième zone de jonction située en aval du boitier 75.

Le quatrième mode de réalisation permet ainsi de refroidir le boitier 75 de manière globale tout en apportant un refroidissement renforcé pour les composants électroniques les plus sensibles à la chaleur et/ou les plus susceptibles de s'échauffer lors de leur fonctionnement.

Ainsi, le dispositif de renouvellement d'air 18, 118, 218 selon l'invention permet d'une part de limiter la condensation au sein de l'enceinte 12 et de gêner, voire d'empêcher, la création et la propagation d'un éventuel arc électrique au sein de l'enceinte 12, et d'autre part de refroidir le dispositif de commande 16. Le dispositif de renouvellement d'air 18, 118, 218 présente alors une double fonctionnalité.

Le dispositif de commande 16 est donc soumis à des variations de températures plus modérées, et les composants électroniques 79 du dispositif de commande 16 sont soumis à des températures moins élevées, par exemple inférieures de 5°C par rapport à un montage dépourvu du dispositif de renouvellement d'air 18, 118, 218 selon l'invention.

Le dispositif de commande 16 présente donc une meilleure fiabilité et une durée de vie plus importante. Le fonctionnement de l'appareil 10 de commutation est ainsi amélioré.

On comprend alors que l'appareil 10 de commutation selon l'invention est plus sûr et présente une durée de vie plus importante que l'appareil de commutation de l'état de la technique.

## Revendications

1. Appareil (10) de commutation pour véhicule, notamment pour véhicule ferroviaire, l'appareil (10) de commutation comprenant,
- une enceinte (12),
- un dispositif de commutation (14) disposé dans l'enceinte (12),
- un dispositif de commande (16) du dispositif de commutation (14), le dispositif de commande (16) étant disposé dans l'enceinte (12), et
- un dispositif de renouvellement d'air (18 ; 118 ; 218) configuré pour renouveler au moins en partie l'air dans l'enceinte (12),
**caractérisé en ce que** le dispositif de renouvellement d'air (18; 118; 218) est agencé en outre pour refroidir des composants électroniques (79) du dispositif de commande (16).

2. Appareil (10) de commutation selon la revendication 1, dans lequel le dispositif de renouvellement d'air (18 ; 118 ; 218) est configuré pour refroidir le dispositif de commande (16) par conduction entre le dispositif de renouvellement d'air (18 ; 118 ; 218) et le dispositif de commande (16) et/ou par convection d'air à l'intérieur du dispositif de commande (16).

3. Appareil (10) de commutation selon la revendication 1 ou 2, dans lequel le dispositif de renouvellement d'air (18 ; 118 ; 218) comprend un tube (80) comportant une première extrémité (84) débouchant à l'extérieur de l'enceinte (12) et une deuxième extrémité (86) débouchant à l'intérieur de l'enceinte (12),
le dispositif de renouvellement d'air (18 ; 118 ; 218) étant de préférence configuré pour transporter de l'air depuis l'extérieur de l'enceinte (12) jusqu'à l'intérieur de l'enceinte (12).

4. Appareil (10) de commutation selon la revendication 3, dans lequel le tube (80) est réalisé au moins en partie en un matériau polymérique, le matériau polymérique comprenant de préférence au moins un polyamide.

5. Appareil (10) de commutation selon la revendication 3 ou 4, dans lequel le tube (80) comprend au moins un segment s'étendant à l'intérieur du dispositif de commande (16).

6. Appareil (10) de commutation selon la revendication 5, dans lequel le segment du tube (80) s'étendant à l'intérieur du dispositif de commande (16) définit une surface d'échange supérieure ou égale à 3 000 mm², de préférence supérieure ou égale à 10 000 mm².

7. Appareil (10) de commutation selon la revendication 3 ou 4, dans lequel le dispositif de commande (16) comprend un boitier (75), le tube (80) étant formé du boitier (75), d'une première partie (120) et d'une deuxième partie (122), les première et deuxième parties (120, 122) étant connectées au boitier (75) et s'étendant de part et d'autre du boitier (75), la première partie (120) s'étendant entre la première extrémité (84) et le boitier (75), la deuxième partie (122) s'étendant entre le boitier (75) et la deuxième extrémité (86).

8. Appareil (10) de commutation selon l'une quelconque des revendications 3 à 7, dans lequel le tube (80) s'étend en partie le long du dispositif de commande (16) et est en contact avec un boitier (75) dudit dispositif de commande (16).

9. Appareil (10) de commutation selon l'une quelconque des revendications précédentes, dans lequel le dispositif de commutation (14) est un dispositif de disjonction comportant un interrupteur (50) électrique, un actionneur (52) et un organe d'entrainement (54) reliant l'interrupteur (50) à l'actionneur (52).

10. Véhicule, notamment ferroviaire, comprenant un appareil (10) de commutation selon l'une quelconque des revendications 1 à 9.

## Patentansprüche

1. Schaltgerät (10) für Fahrzeug, insbesondere für Schienenfahrzeug, das Schaltgerät (10) umfassend,
- - ein Gehäuse (12),
- eine Schaltvorrichtung (14), die in dem Gehäuse (12) angeordnet ist,
- eine Steuervorrichtung (16) der Schaltvorrichtung (14), wobei die Steuervorrichtung (16) in dem Gehäuse (12) angeordnet ist, und
- eine Lufterneuerungsvorrichtung (18; 118; 218), die konfiguriert ist, um die Luft in dem Gehäuse (12) zumindest teilweise zu erneuern,
**dadurch gekennzeichnet, dass** die Lufterneuerungsvorrichtung (18; 118; 218) ferner eingerichtet ist, um elektronische Komponenten (79) der Steuervorrichtung (16) zu kühlen.

2. Schaltgerät (10) nach Anspruch 1, wobei die Lufterneuerungsvorrichtung (18; 118; 218) konfiguriert ist, um die Steuereinrichtung (16) durch Leiten zwischen der Lufterneuerungsvorrichtung (18; 118; 218) und der Steuervorrichtung (16) und/oder durch Konvektion von Luft innerhalb der Steuervorrichtung (16) zu kühlen.

3. Schaltgerät (10) nach Anspruch 1 oder 2, wobei die Lufterneuerungsvorrichtung (18; 118; 218) ein Rohr (80) umfasst, umfassend ein erstes Ende (84), das nach außerhalb des Gehäuses (12) mündet, und ein zweites Ende (86), das in das Innere des Gehäuses (12) mündet, wobei die Lufterneuerungsvorrichtung (18; 118; 218) vorzugsweise konfiguriert ist, um die Luft von außerhalb des Gehäuses (12) in das Innere des Gehäuses (12) zu befördern.

4. Schaltgerät (10) nach Anspruch 3, wobei das Rohr (80) zumindest teilweise aus einem polymeren Material gefertigt ist, das polymere Material vorzugsweise umfassend mindestens ein Polyamid.

5. Schaltgerät (10) nach Anspruch 3 oder 4, wobei das Rohr (80) mindestens ein Segment umfasst, das sich in das Innere der Steuervorrichtung (16) erstreckt.

6. Schaltgerät (10) nach Anspruch 5, wobei das Segment des Rohrs (80), das sich in das Innere des Steuergeräts (16) erstreckt, eine Wärmeaustauschfläche größer als oder gleich wie 3000 mm², vorzugsweise größer als oder gleich wie 10.000 mm², definiert.

7. Schaltgerät (10) nach Anspruch 3 oder 4, wobei die Steuervorrichtung (16) einen Kasten (75) umfasst, wobei das Rohr (80) aus dem Kasten (75), einem ersten Abschnitt (120) und einem zweiten Abschnitt (122) gebildet ist, wobei der erste und der zweite Abschnitt (120, 122) mit dem Kasten (75) verbunden sind und sich auf beiden Seiten des Kastens (75) erstrecken, wobei sich der erste Abschnitt (120) zwischen dem ersten Ende (84) und dem Kasten (75) erstreckt, wobei sich der zweite Abschnitt (122) zwischen dem Kasten (75) und dem zweiten Ende (86) erstreckt.

8. Schaltgerät (10) nach einem der Ansprüche 3 bis 7, wobei sich das Rohr (80) teilweise entlang der Steuervorrichtung (16) erstreckt und mit einem Kasten (75) der Steuervorrichtung (16) in Kontakt ist.

9. Schaltgerät (10) nach einem der vorherigen Ansprüche, wobei die Schaltvorrichtung (14) eine Trennvorrichtung ist, umfassend einen elektrischen Schalter (50), einen Aktuator (52) und ein Antriebselement (54), das den Schalter (50) mit dem Aktuator (52) verbindet.

10. Fahrzeug, insbesondere Schienenfahrzeug, umfassend mindestens ein Schaltgerät (10) nach einem der Ansprüche 1 bis 9.

## Claims

1. A switching device (10) for a vehicle, in particular for a rail vehicle, the switching device (10) comprising:
- an enclosure (12),
- a switching device (14) positioned in the enclosure (12),
- a control device (16) of the switching device (14), the control device (16) being positioned in the enclosure (12), and
- an air renewal device (18; 118; 218) configured to renew at least some of the air in the enclosure (12),
**characterized in that** the air renewal device (18; 118; 218) is further arranged to cool electronic components (79) of the control device (16).

2. The switching device (10) according to claim 1, wherein the air renewal device (18; 118; 218) is configured to cool the control device (16) by conduction between the air renewal device (18; 118; 218) and the control device (16) and/or by convection of air inside the control device (16).

3. The switching device (10) according to claim 1 or 2, wherein the air renewal device (18; 118; 218) comprises a tube (80) including a first end (84) emerging outside the enclosure (12) and a second end (86) emerging inside the enclosure (12),
the air renewal device (18; 118; 218) preferably being configured to convey air from the outside of the enclosure (12) to the inside of the enclosure (12).

4. The switching device (10) according to claim 3, wherein the tube (80) is at least partially made from a polymeric material, the polymeric material preferably comprising at least one polyamide.

5. The switching device (10) according to claim 3 or 4, wherein the tube (80) comprises at least one segment extending inside the control device (16).

6. The switching device (10) according to claim 5, wherein the segment of the tube (80) extending inside the control device (16) defines an exchange surface greater than or equal to 3000 mm², preferably greater than or equal to 10,000 mm².

7. The switching device (10) according to claim 3 or 4, wherein the control device (16) comprises a housing (75), the tube (80) being formed from the housing (75), a first part (120) and a second part (122), the first and second parts (120, 122) being connected to the housing (75) and extending on either side of the housing (75), the first part (120) extending between the first end (84) and the housing (75), the second part (122) extending between the housing (75) and the second end (86).

8. The switching device (10) according to any one of claims 3 to 7, wherein the tube (80) extends partially along the control device (16) and is in contact with a housing (75) of said control device (16).

9. The switching device (10) according to any one of the preceding claims, wherein the switching device (14) is a circuit breaker device including an electrical switch (50), an actuator (52) and a drive member (54) coupling the switch (50) to the actuator (52).

10. A vehicle, in particular a rail vehicle, comprising a switching device (10) according to any one of claims 1 to 9.
